# FASCICULE DE BREVET EUROPEEN

(11) **EP 3 034 368 B1**
(45) Date de publication et mention de la délivrance du brevet: **12.04.2017**
(21) Numéro de dépôt: 15198115.6
(22) Date de dépôt: 04.12.2015
(51) Int. Cl.: B60T 7/10, B64C 25/44, F16D 65/52

(54) **ACTIONNEUR DE FREINAGE POUR FREIN HYDRAULIQUE DE ROUE D' AÉRONEF**
BREMSAKTUATOR FÜR HYDRAULISCHE RADBREMSE EINES LUFTFAHRZEUGS
BRAKE ACTUATOR FOR AIRCRAFT WHEEL HYDRAULIC BRAKE

(30) Priorité: 17.12.2014 FR 1462611
(43) Date de publication de la demande: 22.06.2016
(73) Titulaire: Safran Landing Systems, 78140 Vélizy-Villacoublay (FR)
(72) Inventeur: EYANGA, Victor, WALES, Mid Glamorgan CF243HQ (GB); GONZALEZ, Vincent, 78000 VERSAILLES (FR)
(74) Mandataire: Lavialle, Bruno François Stéphane

(56) Documents cités:
- FR-A1- 2 297 359
- GB-A- 359 068
- GB-A- 1 378 795
- JP-A- S59 200 823

## Description

L'invention concerne un actionneur de freinage pour frein hydraulique de roue d'aéronef.

### ARRIERE-PLAN TECHNOLOGIQUE DE L'INVENTION

Les freins hydrauliques utilisés pour freiner les roues des aéronefs comprennent généralement une couronne présentant de multiples cavités dans lesquelles des actionneurs de freinage sont rapportés de manière amovible. Chacun des actionneurs comprend une chemise qui est rapportée à étanchéité dans l'une des cavités de la couronne et dans laquelle un piston est monté à coulissement étanche selon un axe de coulissement. La couronne distribue du fluide hydraulique sous pression à toutes ses cavités, fluide qui agit sur le piston pour le faire sortir et appliquer un effort de freinage sur des éléments de friction s'étendant en regard de la couronne, dont des rotors qui tournent avec la roue, et des stators qui sont immobiles en rotation.

Le piston présente en général une course opérationnelle qu'il parcourt lors de l'application d'un effort de freinage. Cette course opérationnelle, de l'ordre de quelques millimètres, est suffisante pour permettre l'application de l'effort de freinage sur les éléments de friction, et le recul du poussoir de façon à permettre la libre rotation des rotors. A cet effet, un ressort s'étendant à l'intérieur du piston assure le recul du poussoir jusqu'à une position de retrait lorsque l'effort de freinage n'est plus appliqué.

Cependant, les éléments de friction s'usant progressivement à la suite de l'application répétée d'efforts de freinage, il importe de faire en sorte que le piston se trouve toujours à proximité des éléments de friction. Pour ce faire, il est connu d'équiper les actionneurs de freinage d'un dispositif de rattrapage d'usure qui s'étend à l'intérieur du piston. Le dispositif de rattrapage d'usure comprend une butée mobile qui est montée coulissante avec friction selon l'axe de coulissement sur une tige centrale s'étendant dans le piston et qui définit la position de retrait du piston.

Lors de l'application d'un effort de freinage, le piston est poussé vers les éléments de friction et, le cas échéant, entraîne la butée mobile avec lui en vainquant la friction entre la tige et la butée, ce qui provoque l'avancement de la butée mobile sur la tige centrale. Lorsque l'effort est relâché, le ressort, qui s'étend entre la butée mobile et le piston, fait reculer le piston jusqu'à la nouvelle position de retrait, qui a avancé du fait de l'avancée de la butée mobile. A cet effet, la butée mobile est associée à un organe de friction qui immobilise la butée mobile, mais qui permet néanmoins son avancement sous la poussée du piston lorsque celui-ci n'atteint pas les éléments de friction du frein.

Dans certaines circonstances, on a pu observer que, dans les zones de la chemise sur laquelle porte l'organe de friction associé à la butée mobile, le joint d'étanchéité du piston pouvait subir une usure plus rapide qui remet en question l'étanchéité de l'actionneur. Le document JP59200823 A divulgue un dispositif de rattrapage d'usure dans in frein à tambour.

### OBJET DE L'INVENTION

L'invention a pour objet de proposer un actionneur de freinage pour frein hydraulique d'aéronef évitant les inconvénients précités.

### PRESENTATION DE L'INVENTION

En vue de la réalisation de ce but, on propose un actionneur de freinage pour frein hydraulique d'aéronef, destiné à être reçu dans l'une des cavités d'une couronne du frein, l'actionneur comprenant :
- une chemise adaptée à être reçue à étanchéité dans la cavité de la couronne ;
- un piston monté à coulissement étanche dans la chemise selon un axe de coulissement pour appliquer un effort de freinage lors de l'introduction d'un fluide sous pression dans la cavité ;
- un dispositif de rattrapage d'usure qui définit une position de retrait du piston dans la chemise au moyen d'une butée mobile pouvant être avancée par le piston lors de l'application d'un effort de freinage ;
- un organe élastique de rappel du piston vers la position de retrait prenant appui sur la butée mobile ;
dans lequel, selon l'invention, la butée mobile est associée à un organe d'indexation cranté autorisant le déplacement de la butée mobile sous la poussée du piston, mais interdisant tout recul de la butée mobile par rapport à la chemise.

Ainsi, on s'affranchit des problèmes liés à l'usage des matériaux de friction dans un environnement potentiellement pollué par la poussière de carbone ou par le fluide hydraulique. L'organe d'indexation cranté définit une succession de positions stables de la butée mobile empêchant celle-ci de reculer même en cas de pollution. Le joint d'étanchéité du piston ne passe plus sur une portion de la paroi de la chemise qui aurait été sollicitée, voire abimée par un organe de friction, rendu inutile du fait de la présence de l'organe d'indexation cranté.

Selon un mode de réalisation préféré, l'organe d'indexation cranté comprend :
- une paroi crantée associée à l'une de la chemise ou de la butée mobile ;
- une bague déformable ayant d'une part une partie crantée adaptée à coopérer avec la paroi crantée, et d'autre part une assise conique adaptée à coopérer avec un siège conique associé à l'autre de la chemise ou de la butée mobile ;
- des moyens de rappel de la bague déformable contre le siège de façon à immobiliser la butée par coopération de la bague avec la paroi crantée ;
- la butée mobile étant apte à avancer d'un ou plusieurs crans relativement à la bague déformable lorsque le piston vient en appui contre la butée mobile et provoque le décollement de la bague de la paroi crantée à l'encontre des moyens de rappel.

### BREVE DESCRIPTION DES FIGURES

L'invention sera mieux comprise à la lumière de la description qui suit en référence aux figures des dessins annexés, parmi lesquelles :
- la figure 1 est une vue en coupe d'un actionneur de freinage selon l'invention illustré en place dans une couronne d'un frein hydraulique d'aéronef au repos ;
- la figure 2 est une figure analogue à la figure 1, l'actionneur étant illustré lors de l'application d'un effort de freinage standard, la course opérationnelle du piston n'étant pas entièrement consommée ;
- la figure 3 est une figure analogue à la figure 2, l'actionneur étant illustré lors de l'application d'un effort de freinage, la course opérationnelle du piston étant entièrement consommée avant que le piston n'arrive au contact des disques ;
- la figure 4 est une figure analogue à la figure 3, illustrant l'avancement de la butée mobile pour permettre au piston de venir au contact des disques ;
- la figure 5 est une figure analogue à la figure 4, l'actionneur étant illustré après relâchement de l'effort de freinage ;
- les figures 6 et 7 sont des figures analogues à la figure 1 de variantes de réalisation de l'actionneur de l'invention.

### DESCRIPTION DETAILLEE DE L'INVENTION

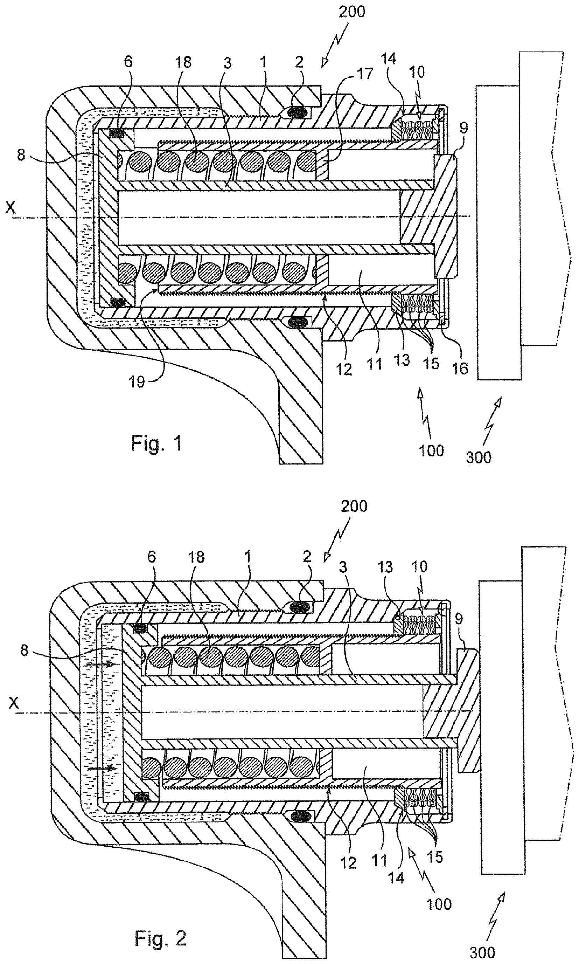

En référence à la figure 1, l'actionneur de freinage 100 de l'invention est destiné à être reçu dans l'une des cavités 200 d'une couronne d'un frein hydraulique d'aéronef, comportant par ailleurs des éléments de friction 300 comprenant une succession de disques rotors et de disques stators, par exemple des disques en carbone, sur lesquels l'actionneur exerce sélectivement un effort de freinage lors de l'admission de fluide sous pression (illustré par des points) dans la cavité 200.

L'actionneur 100 comporte tout d'abord une chemise 1 généralement cylindrique qui est reçue à étanchéité dans la cavité 200 de la couronne. A cet effet, un joint d'étanchéité 2 coopère avec une face externe de la chemise pour contenir le fluide hydraulique dans la cavité.

Un piston 3 est monté pour coulisser dans la chemise 1 selon un axe de coulissement X. A cet effet, le piston 3 comporte une extrémité proximale 8 conformée en palier qui s'étend à ajustement contre une face interne de la chemise 1 et qui reçoit un joint d'étanchéité 6.

On remarquera que l'extrémité proximale 8 du piston 3 est ici fermée par une paroi venue de matière avec le piston, de sorte à confiner le fluide hydraulique dans une zone éloignée des disques 300. L'extrémité distale du piston 3 reçoit un patin 9 pour exercer un appui contre les disques 300.

L'actionneur 100 est muni d'un dispositif de rattrapage d'usure 10 qui, selon l'invention, s'étend entre la chemise 1 et le piston 3. Le dispositif de rattrapage d'usure 10 comporte une butée mobile 11 en forme générale de douille dont la paroi extérieure comporte des crans 12. Cette paroi extérieure crantée 12 coopère avec une bague fendue 13 déformable dont le diamètre interne est également cranté, et qui comporte une assise conique qui coopère avec un siège conique 14 de la chemise 1 pour refermer la bague 13 sur la paroi crantée 12. A cet effet, une série de rondelles élastiques 15 s'étend entre la bague fendue 13 et un anneau d'arrêt 16 servant de butée. La fonction de ces rondelles élastiques 15 est de repousser en permanence la bague fendue 13 contre le siège conique 14 pour la forcer à se refermer sur les crans de la paroi extérieure crantée 12, et ainsi immobiliser la butée mobile 11. La butée mobile 11 comporte une protrusion interne 17 qui définit une butée pour un ressort de rappel 18 s'étendant entre ladite protrusion 17 et le piston 3 pour rappeler celui-ci vers la position de retrait.

L'une des faces d'extrémité 19 de la butée mobile 11 (tournée vers l'extrémité proximale 8 du piston 3) peut être engagée par le piston 3 lui-même lorsque la course opérationnelle a été entièrement consommée avant que le piston 3 n'atteigne les disques 300, comme cela sera détaillé plus loin.

Le fonctionnement de l'actionneur de freinage de l'invention est le suivant. Partant de la position de retrait illustrée à la figure 1, on applique un effort de freinage en admettant du fluide sous pression dans la cavité 200. Le fluide repousse le piston 3 vers les disques 300 à l'encontre de l'effort du ressort 18. Le piston 3 vient alors appliquer un effort de presse sur les disques 300, comme illustré à la figure 2.

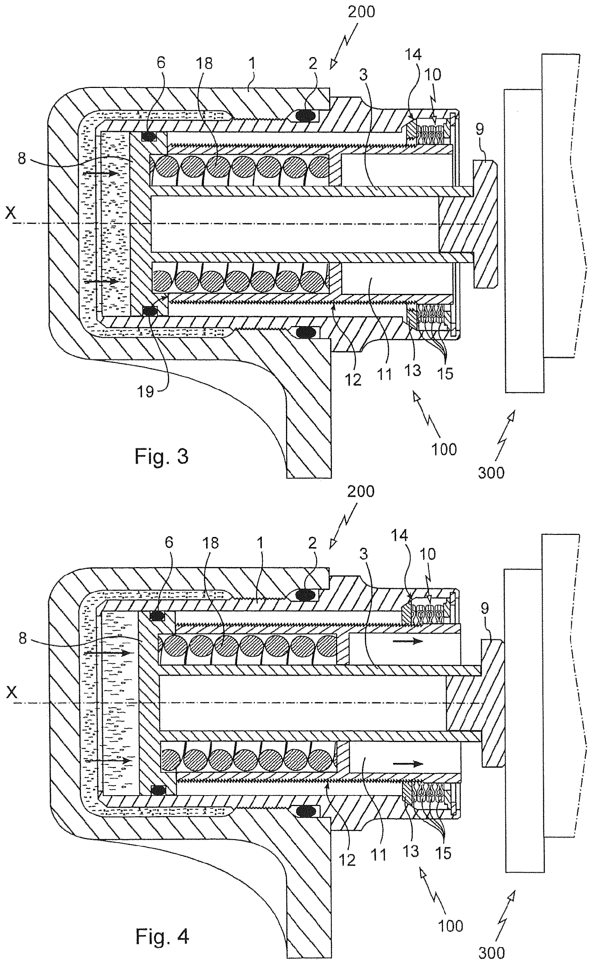

Cependant, il se peut que la distance entre le patin 9 et les disques soit plus grande que la course opérationnelle du piston 3. Dans cette situation, et comme illustré à la figure 3, avant de toucher les disques 300, le piston 3 provoque la compression du ressort 18 au point que le piston 3 vienne accoster la face d'extrémité 19 de la butée mobile 11. Le piston 3 pousse alors la butée mobile 11 à l'encontre de l'effort résistant des rondelles élastiques 15, ce qui a pour effet de faire monter la bague fendue 13 sur son siège conique 14.

Si la poussée du piston 3 continue, l'effort résistant des rondelles élastiques 15 va devenir suffisamment important pour forcer l'ouverture de la bague fendue 13, de sorte que celle-ci saute d'un ou plusieurs crans pour permettre l'avancée de la butée mobile 11 sous la poussée du piston 3, tout en revenant en butée contre son siège conique 14, comme illustré à la figure 4. Le retour de la bague fendue 13 contre le fond du siège conique 14 a pour effet de confirmer celle-ci autour de la butée mobile 11, ce qui immobilise celle-ci dans une nouvelle position, avancée par rapport à la précédente. Les crans empêchent tout mouvement de recul de la butée mobile 11.

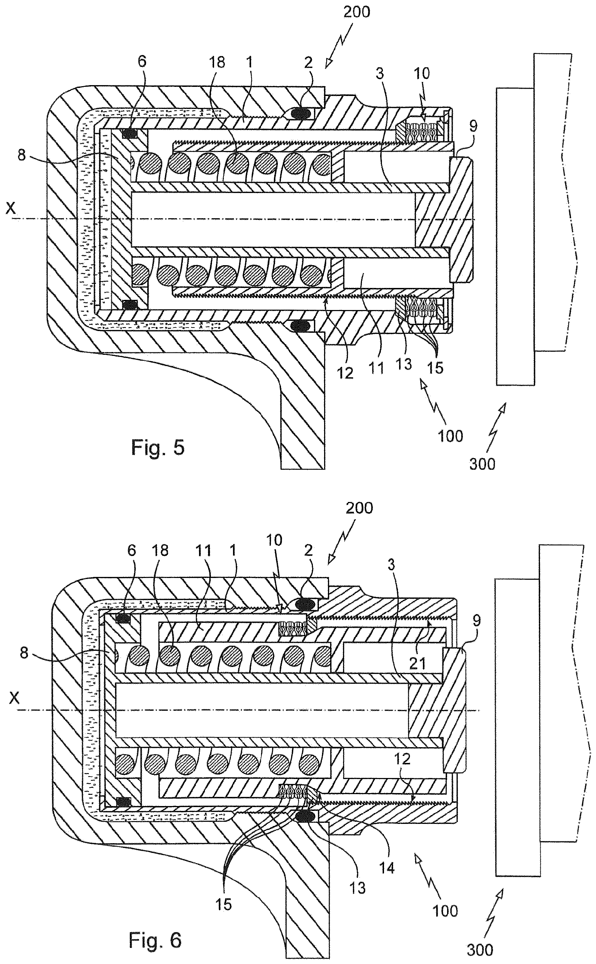

Puis, quand l'effort de freinage est relâché, le piston 3 recule sous l'effet du ressort 18, définissant ainsi une nouvelle position de retrait, avancée par rapport à la précédente. La course opérationnelle du piston (entre la position de la figure 4 et la position de la figure 5) est inchangée, seule la position de retrait ayant légèrement avancé pour compenser l'usure des disques 300.

Sur la variante de réalisation illustrée à la figure 6, les crans sont maintenant portés par une surface interne 21 de la chemise 1 qui s'étend en prolongement de la surface cylindrique contre laquelle frotte le joint d'étanchéité 6. Il est à noter que les crans ont des pentes inversées par rapport à leur pente des figures 1 à 4. La bague fendue 13 est également inversée, et c'est son diamètre externe qui est maintenant cranté. Le siège conique 14 est maintenant formé dans la butée mobile 11, les rondelles élastiques 15 forçant toujours la bague fendue 13 en appui contre le siège conique 14. Le fonctionnement de cette variante est en tout point similaire à ce qui a été décrit auparavant.

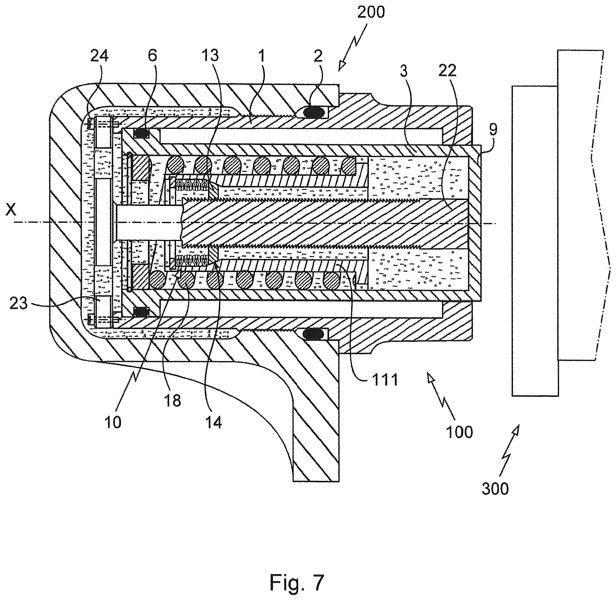

Sur la variante de réalisation illustrée à la figure 7, les crans sont maintenant portés par une tige centrale 22. Ici la butée mobile 111 est toujours en forme de douille, mais s'étend entre la tige centrale 22 et le piston 3, de sorte que le ressort 18 s'étend à l'intérieur du piston 3 et non autour, comme auparavant. Le siège conique 14 est maintenant formé à l'intérieur de la butée mobile 111. La tige centrale 22 comporte une tête 23 solidarisée à la chemise 1 par des vis 24, de sorte que la paroi crantée est associée à la chemise 1. On remarquera qu'ici le fluide hydraulique n'est pas arrêté par une paroi de l'extrémité proximale du piston 3, et qu'il baigne donc entièrement l'intérieur du piston 3, y compris le mécanisme de rattrapage d'usure 10 dont le fonctionnement n'en est aucunement altéré. En effet, les crans et la fermeture de la bague fendue 13 sur les crans du fait de son appui sur le siège conique 14 assurent l'immobilisation de la butée mobile 111, quand bien même le mécanisme de rattrapage d'usure 10 baigne dans le fluide hydraulique.

L'invention n'est pas limitée à ce qui vient d'être décrit, mais englobe au contraire toute variante entrant dans le cadre défini par les revendications.

## Revendications

1. Actionneur de freinage pour frein hydraulique d'aéronef, destiné à être reçu dans l'une des cavités d'une couronne du frein, l'actionneur comprenant :
- une chemise (1) adaptée à être reçue à étanchéité dans la cavité de la couronne ;
- un piston (3) monté à coulissement étanche dans la chemise selon un axe de coulissement pour appliquer un effort de freinage lors de l'introduction d'un fluide sous pression dans la cavité ;
**caractérisé par**
- un dispositif de rattrapage d'usure (10) qui définit une position de retrait du piston dans la chemise au moyen d'une butée mobile (11; 111) pouvant être avancée par le piston lors de l'application d'un effort de freinage ;
- un organe élastique de rappel (18) du piston vers la position de retrait prenant appui sur la butée mobile ;
dans lequel, selon l'invention, la butée mobile est associée à un organe d'indexation cranté (13) autorisant le déplacement de la butée mobile sous la poussée du piston, mais interdisant tout recul de la butée mobile par rapport à la chemise.

2. Actionneur de freinage selon la revendication 1, dans lequel l'organe d'indexation cranté comprend :
- une paroi crantée associée à l'une de la chemise (1) ou de la butée mobile (11; 111) ;
- une bague déformable (13) ayant d'une part une partie crantée adaptée à coopérer avec la paroi crantée, et d'autre part une assise conique adaptée à coopérer avec un siège conique associé à l'autre de la chemise ou de la butée mobile ;
- des moyens de rappel (15) de la bague déformable contre le siège de façon à immobiliser la butée par coopération de la bague avec la paroi crantée ;
la butée mobile étant apte à avancer d'un ou plusieurs crans relativement à la bague déformable lorsque le piston vient en appui contre la butée mobile et décolle la bague de la paroi crantée à l'encontre des moyens de rappel.

3. Actionneur de freinage selon la revendication 2, dans lequel la butée mobile (11) s'étend autour du piston et comporte une paroi externe tournée vers la chemise qui est crantée.

4. Actionneur selon la revendication 2, dans lequel la butée mobile (11) s'étend autour du piston, la chemise ayant une paroi interne tournée vers la butée mobile qui est crantée.

5. Actionneur selon la revendication 2, dans lequel la butée mobile (111) s'étend à l'intérieur du piston, la chemise étant associée à une tige centrale (22) ayant une paroi externe tournée vers la butée mobile qui est crantée.

## Patentansprüche

1. Bremsaktor für eine Hydraulikbremse eines Luftfahrzeugs, der dazu bestimmt ist, in einem der Hohlräume eines Kranzes der Bremse aufgenommen zu werden, wobei der Aktor umfasst:
- eine Buchse (1), die dazu geeignet ist, auf dichte Weise in dem Hohlraum des Kranzes aufgenommen zu werden;
- einen Kolben (3), der in der Buchse entlang einer Verschiebungsachse auf dichte Weise verschiebbar gelagert ist, um beim Einbringen eines Druckfluids in den Hohlraum eine Bremskraft auszuüben; **gekennzeichnet durch** eine Verschleißnachstellvorrichtung (10), die eine Rückzugsposition des Kolbens in die Buchse mittels eines beweglichen Anschlags (11; 111) definiert, der von dem Kolben beim Aufbringen einer Bremskraft vorgeschoben werden kann;
- ein elastisches Rückstellelement (18) zum Rückstellen des Kolbens in die Rückzugsposition, das an dem beweglichen Anschlag zur Anlage kommt;
wobei erfindungsgemäß der bewegliche Anschlag mit einem gekerbten Indexierelement (13) verbunden ist, das die Verschiebung des beweglichen Anschlags unter dem Schub des Kolbens gestattet, jedoch jeglichen Rücklauf des beweglichen Anschlags in Bezug auf die Buchse untersagt.

2. Bremsaktor nach Anspruch 1, bei dem das gekerbte Indexierelement umfasst:
- eine gekerbte Wand, die entweder mit der Buchse (1) oder dem beweglichen Anschlag (11; 111) verbunden ist;
- einen verformbaren Ring (13), der einerseits einen gekerbten Abschnitt hat, der dazu geeignet ist, mit der gekerbten Wand zusammenzuwirken, und andererseits einen konischen Sitz, der dazu geeignet ist, mit einem konischen Sitz zusammenzuwirken, der mit dem anderen Element aus Buchse und beweglichem Anschlag verbunden ist;
- Rückstellmittel (15) zum Rückstellen des verformbaren Ringes gegen den Sitz derart, dass der Anschlag durch Zusammenwirken des Ringes mit der gekerbten Wand blockiert wird;
wobei der bewegliche Anschlag dazu geeignet ist, um eine oder mehrere Rasten relativ zum verformbaren Ring vorzurücken, wenn der Kolben an dem beweglichen Anschlag zur Anlage kommt und den Ring entgegen der Rückstellmittel von der gekerbten Wand löst.

3. Bremsaktor nach Anspruch 2, bei dem sich der bewegliche Anschlag (11) um den Kolben herum erstreckt und eine zur Buchse gerichtete Außenwand umfasst, die gekerbt ist.

4. Aktor nach Anspruch 2, bei dem sich der bewegliche Anschlag (11) um den Kolben herum erstreckt, wobei die Buchse eine zum beweglichen Anschlag gerichtete Innenwand hat, die gekerbt ist.

5. Aktor nach Anspruch 2, bei dem sich der bewegliche Anschlag (111) im Inneren des Kolbens erstreckt, wobei die Buchse mit einer zentralen Stange (22) verbunden ist, die eine zum beweglichen Anschlag gerichtete Außenwand hat, die gekerbt ist.

## Claims

1. Brake actuator for an aircraft hydraulic brake, which is intended to be added into one of the cavities of a brake ring, the actuator comprising:
- a liner (1) designed to be housed sealingly in the cavity of the ring;
- a piston (3) mounted to slide sealingly in the liner along an axis of sliding so as to apply a braking force when a fluid is introduced under pressure into the cavity;
**characterized by**
- a wear compensation device (10) which defines a position to which the piston retreats into the liner by means of a mobile stop (11; 111) that can be moved forward by the piston as a braking force is applied;
- an elastic return member (18) returning the piston towards the retracted position bearing against the mobile stop;
in which, according to the invention, the mobile stop is associated with a notched indexing member (13) allowing the mobile stop to move under the thrust of the piston, but preventing any return motion of the mobile stop with respect to the liner.

2. Brake actuator according to Claim 1, in which the notched indexing member comprises:
- a notched wall associated with one of the liner (1) and the mobile stop (11; 111);
- a deformable ring (13) having on one hand a notched portion suitable for engaging with the notched wall, and on the other hand a conical seat suitable for engaging with a conical seat associated with the other of the liner and the mobile stop;
- return means (15) returning the deformable ring against the seat so as to immobilise the stop by means of engagement between the ring and the notched wall;
the mobile stop being able to advance by one or more notches relative to the deformable ring when the piston comes to bear against the mobile stop and lifts the ring off from the notched wall counter to the return means.

3. Brake actuator according to Claim 2, in which the mobile stop (11) extends around the piston and comprises an outer wall oriented towards the liner, which is notched.

4. Actuator according to Claim 2, in which the mobile stop (11) extends around the piston, the liner having an inner wall oriented towards the mobile stop, which is notched.

5. Actuator according to Claim 2, in which the mobile stop (111) extends inside the piston, the liner being associated with a central rod (22) having an outer wall oriented towards the mobile stop, which is notched.
